# EUROPEAN PATENT SPECIFICATION

(11) **EP 2 899 530 B1**
(45) Date of publication and mention of the grant of the patent: **04.05.2016**
(21) Application number: 14152565.9
(22) Date of filing: 24.01.2014
(51) Int. Cl.: G01N 13/02

(54) **Contact angle measurement apparatus**
Kontaktwinkelmessvorrichtung
Appareil de mesure d'angle de contact

(43) Date of publication of application: 29.07.2015
(73) Proprietor: Krüss GmbH, 22453 Hamburg (DE)
(72) Inventor: Friedrich, Bernd, 25474 Hasloh (DE); Bergmann, Tom, 22453 Hamburg (DE)
(74) Representative: Hauck Patentanwaltspartnerschaft mbB

(56) References cited:
- EP-A1- 0 919 801
- JP-A- S6 085 353
- US-A- 5 861 946
- US-A1- 2004 050 866

## Description

The present application relates to contact angle measurement apparatus for measuring a contact angle between a surface of a sample body and at least one drop of sample liquid disposed on the surface, the apparatus comprising, at least one drop dosing device adapted and arranged for applying a drop of a liquid onto a surface of a sample body, an illuminating device adapted and arranged for illuminating each drop applied by the at least one drop dosing device and disposed on the surface from a first side of the at least one drop, and an image recording device adapted and arranged for recording an image of at least a transition region between the surface and each drop applied by the at least one drop dosing device and disposed on the surface in side view from a second side of the drop opposite the first side, wherein each of the at least one drop dosing device comprises a syringe having a needle and a movable piston and adapted to supply, by movement of the piston, liquid through the needle and out of an opening of the needle onto the surface, a first motor coupled to a portion of the syringe other than the piston and adapted to move the syringe, and a second motor coupled to the piston and adapted for moving the piston, and the contact angle measurement apparatus comprises a controller connected to the first and second motors and adapted to control operation of the first and second motors.

The wettability of liquids on surfaces of solids is of great importance in many fields of technology, such as in the field of industrial production. For example, processes such as coating, painting, cleaning, printing, hydrophobic or hydrophilic coating, bonding, dispersion, etc. are influenced in a decisive manner by the wettability.

For a particular pair of solid and liquid the wettability is determined by, amongst others, the surface free energy of the solid and the surface tension of the liquid. In view of the fact that, following application of the liquid onto a surface of the solid, these parameters also determine the angle between the surface of the liquid and the surface of the solid at the point at which the surface of the liquid meets the surface of the solid, a measurement of this so-called contact angle can be used as a measure of the wettability. On this basis methods are known for characterizing surfaces of solid bodies with respect to their wettability properties by applying one or more drops of liquids having known properties (in particular known surface tensions) and serving as "sensors" onto a surface of interest and measuring the corresponding contact angle or angles. When using two or more different liquids having a different degree of polarity, it is further possible to derive the surface free energy from the measured contact angles of drops of the different liquids.

DE 197 54 765 C1 discloses a contact angle measurement apparatus which is adapted for carrying out methods of these types. It includes a syringe type drop dosing device adapted for metering a drop of liquid onto a surface of a solid sample body, an illuminating device adapted and arranged for illuminating the drop from a first side and a camera for recording a shadow image of the drop from a second side opposite the first side. Further, an image processing device is provided which is adapted to carry out a recognition of the contour of the drop and of the surface of the solid in the image recorded by the camera and to subsequently determine the contact angle based on the recognized contour and surface.

A syringe type drop dosing device, such as used in DE 197 54 765 C1, is operated by moving it close to a surface, onto which a drop is to be applied, and transferring a drop located at the tip of a needle of the drop dosing device from the needle to the surface. For this purpose two motors are provided which are each mounted on a respective spindle associated with the respective motor. One of the motors is coupled to a piston of the drop dosing device and adapted for moving the piston in order to move liquid from and into the drop dosing device, and the other of the motors is coupled to a portion of the drop dosing other than the piston and adapted for moving the entire drop dosing device towards and away from a surface. This motor arrangement is relatively bulky, which also has negative consequences on the overall dimensions of the apparatus which can be achieved.

Further, in case the surface free energy is to be determined, either two or more drops of different liquids have to be applied to the surface one after the other using the same drop dosing device, or two or more of the syringe type drop dosing devices have to be provided next to each other and have to be connected to liquid reservoirs storing the different liquids or provided with the different liquids in a different manner, such as, e.g., by manually drawing the liquids into the piston chambers of the drop dosing devices. While the first option has the disadvantage that the speed of the measuring process is slow, also because of the need to avoid any contamination of the liquids among each other, the second option has to take into consideration that the syringe type drop dosing devices are rather bulky. Consequently, it is difficult to place the drops sufficiently close to each other to be able to record them in a single image when using a conventional camera.

It is an object of the present invention to provide a contact angle measurement apparatus which is of a simple and low bulk construction and is able to allow for an increased speed of measurement of surface free energy, and which overcomes the above disadvantages.

This object is achieved by a contact angle measurement apparatus according to claim 1. Advantageous embodiments of the apparatus are the subject-matter of the respective dependent claims.

The contact angle measurement apparatus is adapted to measure a contact angle between a surface of a solid sample body and one or more drops of sample liquid disposed on the surface. In case of two or more drops, which may be drops disposed on the surface next to each other at the same time or drops disposed on the surface at different points in time, the contact angle is measured for each drop of interest.

The apparatus includes one, two or more drop dosing devices. Each of these drop dosing devices is adapted and arranged for applying a drop of a liquid onto a surface of a sample body. This process is carried out by metering the drop, which may advantageously be effected such that it has a defined drop volume. Each of the drop dosing devices includes a fluid storing chamber which has to be filled manually or automatically with a suitable liquid prior to applying a drop of that liquid to the surface.

Irrespective of the specific characteristics of the drop dosing device or devices it may be advantageous if the apparatus also comprises a liquid reservoir arrangement for storing one, two or more liquids. The liquid reservoir arrangement has one, two or more liquid reservoirs, and each of the drop dosing devices - or, more precisely, the fluid storing chamber thereof - is in fluid communication with the liquid reservoir arrangement, more particularly with at least one of the liquid reservoirs of the liquid reservoir arrangement. In case two or more liquids are to be used, the liquid reservoir arrangement preferably includes a corresponding number of separate liquid reservoirs, each adapted for storing a different one of the liquids. In operation, liquid or liquids to be used for forming drops on a surface of a sample body is or are stored in the liquid reservoir arrangement, more particularly in a liquid reservoir or liquid reservoirs of the liquid reservoir arrangement, and can be delivered manually or preferably automatically to the drop dosing devices. In case two or more drop dosing devices are provided, they may be coupled to the liquid reservoir arrangement such that they apply the same liquid to different locations on the surface, e.g. in order to determine variations of the surface properties. However, as will be explained in more detail further below, it is preferred for two or more drop dosing devices being coupled to different liquid reservoirs of the liquid reservoir arrangement storing different liquids.

Moreover, in any case the apparatus comprises an illuminating device and an image recording device. The illuminating device is adapted and arranged for illuminating any drop applied by the drop dosing device or drop dosing devices and disposed on the surface from a first side of the respective drop, and the image recording device is adapted and arranged for recording an image of any such drop or of at least a transition region between the surface and any such drop in side view from a second side of the drop opposite the first side. Thus, the relative arrangement of the illuminating device and the image recording device is such that images of drops can be recorded in a back-lit lighting arrangement to obtain shadow images of the drops. It is to be noted that a separate image may be recorded for each of the above drops, or a single image may be recorded for a plurality of the above drops or all of the above drops.

The drop dosing device or each of the drop dosing devices comprises a syringe, which includes the respective fluid storing chamber in the form of a piston chamber, a first motor and a second motor. The syringe includes a needle or cannula and a movable piston and is adapted to supply, by movement of the piston, liquid from the fluid storing chamber through the needle and out of an opening of the needle onto the surface. The first motor is coupled - and preferably rigidly coupled - to a portion of the syringe other than the piston and is adapted to move the syringe as a whole, and the second motor is coupled - and preferably rigidly coupled - to the piston and is adapted for moving the piston with respect to the remainder of the syringe.

The contact angle measurement apparatus also comprises a controller which is connected to both the first and second motors and is adapted to separately control their operation. The controller may advantageously be an electronic component which may be integrated into a common housing with some or all of the remaining components of the apparatus. However, it is, e.g., also possible to provide the controller as a separate computing device, such as a suitably programmed computer or PC, connected to the remainder of the apparatus and not integrated into a common housing with other components of the apparatus.

The first motor and the second motor are movably mounted in a spaced manner on a common screw spindle for movement along the spindle upon operation of the respective motor. Due to the coupling of the first motor to a portion of the syringe other than the piston, the syringe as a whole follows the movement of the first motor along the spindle, and due to the coupling of the second motor to the piston, the piston follows the movement of the second motor along the spindle.

It is to be noted that the coupling of the first motor to a portion of the syringe other than the piston is preferably such that the syringe as a whole may follow the movement of the first motor in both directions of movement along the spindle. For example, a coupling element - and preferably a rigid coupling element - may be fixedly or releasably attached to both the first motor and a portion of the syringe other than the piston. Alternatively, such a coupling element may be fixedly or releasably attached to the first motor and may comprise a seat or support portion which engages the syringe without being attached to it. In the latter case, it may be provided that the seat or support portion supports the syringe against movement (relative to the seat or support portion) in one of the two directions along the spindle only and that in operation the syringe follows the first motor in the other of the two directions due to gravitation. However, it is in principle also possible that the coupling is such that the syringe as a whole follows the movement of the first motor in one of the two directions only, which is the direction in which in operation the syringe as a whole is moved towards the surface of a sample body. In the latter case, the syringe must be removed from the apparatus after application of drops to the surface, and is, e.g., re-installed in the apparatus after having moved the first motor into the other direction along the spindle.

Further, it is to be noted that the coupling of the second motor to the piston may be such that the piston may follow the movement of the second motor in both directions of movement along the spindle. Similar to the case of the first motor, the second motor or an intermediate coupling element may then be fixedly or releasably attached to the piston or may suitably engage the piston without being attached to it. Alternatively, the coupling may be such that the piston follows the movement of the second motor in one of the two directions only, which is the direction in which in operation the piston is operated to apply a drop of liquid from the syringe to a surface of a sample body. In the latter case, the syringe must be removed from the apparatus after application of drops to the surface, and is, e.g., re-installed in the apparatus after having moved the second motor into the other direction along the spindle and having refilled the syringe with liquid.

In view of the above, it is evident that the coupling of the first motor and the second motor to a portion of the syringe other than the piston and to the piston, respectively, may involve fixedly or releasably attaching or securing the respective motor either directly or via an intermediate coupling element to the portion and piston, respectively, or may involve a suitable engagement between the respective motor or an intermediate coupling element and the portion and piston, respectively.

The spindle may be stationary or movable. The controller is adapted to operate both the first and the second motor to move with the same speed in the same direction in a first mode of operation, and to operate only the second motor while maintaining the first motor stationary in a second mode of operation. Due to the fact that in the first mode of operation the piston does not move with respect to the remainder of the syringe, the syringe is moved as a whole without operating the piston. By contrast, in the second mode of operation the piston is operated, thereby enabling transport of liquid through the needle. Alternatively or additionally, the controller is adapted to operate both the first and second motors to move with different speeds in the same direction in a third mode of operation for moving the syringe as a whole and simultaneously operating the piston. In the third mode of operation, transport of liquid through the needle may be effected at the same time with moving the syringe as a whole. However, it is preferred if the controller is adapted to implement or make use of the first and second modes of operation only.

The above configuration provides the advantage that due to the use of only one spindle and a single guide for guiding two different motions the dimensions of the respective drop dosing device can be considerably reduced, allowing for a particularly compact construction of the drop dosing device and the entire apparatus.

In an advantageous embodiment the entire apparatus may be constructed as a mobile apparatus. It is easily possible to select suitable components for the construction of the apparatus, which components are of sufficiently small dimensions. However, depending on the application at issue, the entire apparatus or at least parts of the apparatus may also be constructed to be stationary, i.e. non-mobile.

It is to be noted that the apparatus may be used both for planar and for curved surfaces, wherein the construction of the apparatus determines the allowable maximum curvature in that it must be possible to record shadow images of the drops in the manner described above. The apparatus may include a support structure by means of which it can be supported on the surface on which the measurement is to be carried out and/or by means of which it can be suspended above the surface. Of course, it is also possible that the apparatus is held in its measurement position above or on the surface by a suitable external holding means. Such support structure or holding means may be constructed to be adjustable in order to allow for adaptability to surfaces of different shapes. In addition or in the alternative, the illuminating device and/or the image recording device may be constructed to have adjustable positions in order to allow for such adaptability.

In a preferred embodiment, the controller is adapted to selectively carry out an automatic operating sequence in which the first and second motors are controlled at first in the first mode of operation for moving the syringe towards the surface, and subsequently in the second mode of operation for applying a drop of liquid to the surface, or vice versa. Alternatively or in addition, the controller may also be adapted to selectively carry out an automatic operating sequence in which the first and second motors are controlled in the third mode of operation for simultaneously generating a drop at a tip of the needle and moving the syringe towards the surface and applying the drop of liquid to the surface. In any case, it is further preferred if the apparatus further comprises a distance determining means, such as a distance sensor, connected to the controller and adapted to provide a signal representative of the distance between the syringe and the surface to the controller. The controller can then be adapted to receive the signal and to use the signal in order to move the syringe to the appropriate position above the surface of interest in the first or third mode of operation during the automatic sequence. The above configuration simplifies use of the apparatus.

In a preferred embodiment, the drop dosing device or each of the drop dosing devices is arranged to apply drops of liquid in a field of view of the image recording device and/or in a region illuminated by the illuminating device. Consequently, the image recording device, the sample body and/or the illuminating device do not have to be moved after application of a drop, thereby decreasing the time necessary for recording an image of the drop after its application.

In this embodiment, but also in general, it is preferred if the drop dosing device or drop dosing devices, the illuminating device and the image recording device are integrated into a movable measurement head. This provides for a particularly easy to use configuration.

The image recording device may be a camera or a device including a light-sensitive sensor, such as, e.g., a CCD image sensor or a CMOS image sensor. Thus, the image recording device may be, e.g., a CCD or CMOS camera.

In a preferred embodiment, the contact angle measurement apparatus further comprises a processing device, which is connected to or forms part of the image recording device and which is adapted for carrying out a contour recognition of any drops present in images recorded by the image recording device and determining for each of these drops a contact angle from the recognized contour. The contour recognition may be based, e.g., on a grey-scale analysis of the image and then fitting a geometrical model describing the drop shape to the image in order to determine the contour.

In a preferred embodiment, the contact angle measurement apparatus further comprises an actuation means, such as a button or switch, for actuation by an operator and connected to the controller. The controller is adapted to detect actuation of the actuation means and, upon detecting actuation, to automatically control the drop dosing device or drop dosing devices to apply a respective drop of liquid to the surface, the illuminating device to illuminate each such drop, and the image recording device to record an image of each such drop illuminated by the illuminating device. In particular, the above-described automatic operating sequence is advantageously part of the automatic control initiated by actuation of the actuation means. Thus, a "one click solution" is provided which greatly simplifies use of the apparatus. In case the apparatus includes a processing device of the above configuration for carrying out contour recognition and contact angle determination, the one click solution advantageously also comprises automatically controlling the processing device by the controller to determine the contact angle for each of the drops. Consequently, it is only necessary for the operator to move the contact angle measurement apparatus into a suitable position above the surface and to actuate the actuation means, and subsequently the apparatus is operating autonomously until the desired measurement results are provided.

In the following an exemplary embodiment of the display device will be explained in more detail with reference to the drawings.
Figure 1 shows a schematic sectional side view of the contact angle measurement apparatus according to an embodiment of the present invention.
Figure 2 shows a schematic side sectional view of a drop dosing device of the apparatus of Figure 1.

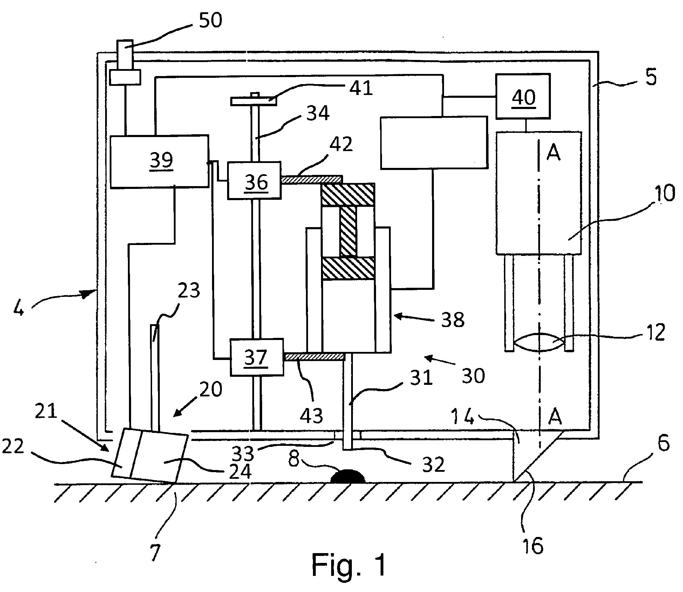

The contact angle measurement apparatus 4 shown in Figure 1 in a schematic sectional side view is illustrated in its measurement position closely above the surface 6 of a solid sample body 7, which surface 6 is preferably oriented horizontally. It can be seen that a drop 8 is disposed on the surface 6. The contact angle measurement apparatus 4 is operable to determine the angle between a tangent of the contour of the drop 8 and the surface 6 of the sample body 7 at a point where the contour and the surface 6 meet, i.e. which is common to the surface 6 and the contour. In the illustration of Figure 1 the tangent extends in the plane of the Figure. For a correct fitting of the tangent to the contour of the drop 8 it is necessary that the drop 8 or at least a transition region between the drop 8 and the surface 6 of the sample body 7 is imaged in side view, which in the case of Figure 1 is done by viewing the drop 8 from the right.

For this purpose, the apparatus 4 comprises inside a housing 5 a camera 10. The optical axis A-A of the camera 10 extends perpendicularly to the surface 6 of the sample body 7. However, when suitably adapting the imaging beam path, it is also possible to provide an angle between the optical axis A-A and the surface 6 different from 90°. The camera 10 includes a lens 12, which is preferably focusable automatically.

Projecting from the bottom side of the housing 5 is a total-reflection prism 14 which serves as a deflection means for the imaging beam path of the camera 10. The prism 14 enables recording an image of the drop 8 by the camera 10 in side view parallel or essentially parallel to the surface 6. Total reflection is occurring at the side face 16 of the prism 14.

The apparatus 4 further comprises an illuminating device 20 which is disposed opposite the camera 10, on the other side of the drop 8. The illuminating device 20 includes an illuminating unit 21 and a spring suspension arrangement 23 mounted inside the housing 5 and carrying the illuminating unit 21 in such a manner that the illuminating unit 21 projects or may project from the bottom side of the housing 5 and - in operation, i.e. in the measurement position illustrated in Figure 1 - can be elastically pressed against the surface 6. The spring suspension arrangement 23 may preferably comprise one or more leaf springs (not shown) which are arranged and constructed to allow for guided movement of the illuminating unit 21 in a direction parallel to the optical axis A-A. In other words, the leaf spring or leaf springs provide a substantially higher resistance against movement perpendicularly to the optical axis A-A than against movement parallel to this direction.

In the illustrated advantageous embodiment the illuminating unit 21 comprises a light source 22 and a light diffuser 24 arranged such that light emitted by the light source 22 passes through the light diffuser 24. The illuminating unit 21 is mounted and oriented in such a manner that - in the measurement position illustrated in Figure 1 - the light diffuser 24 is disposed between the prism 14 (and the drop 8) and the light source 22. Like the prism 14, in the measurement condition of the apparatus 4 the illuminating unit 21 is disposed close to the surface 6 of the sample body 7 and is operable to illuminate the drop 8 from a side along or essentially along the surface 6 with light emitted by the light source 22 and diffused by the diffuser 24 for homogenization purposes. In the schematic representation of Figure 1, the drop 8 is illuminated from the left side, so that a back-lit lighting arrangement is created for the camera 10 and a shadow image of the drop 8 can be recorded by the camera 10, allowing for determining the contour of the drop 8.

The light source 22 may preferably comprise a one- or two-dimensional array of light-emitting elements creating a two-dimensional light field, so that the camera 10 views both the drop 8 and the light field from the side of the drop 8 opposite the light field. The light-emitting elements can be switched on and off selectively for adjusting the width, and possibly also the height, of the light field in order to adapt the light field to the drop or drops 8 at issue. The light diffuser 24 advantageously may be constructed such that it comprises separate diffuser sections for the individual light-emitting elements, which diffuser sections are separated such that each diffuser section receives - and diffuses - light essentially or at least predominantly from the associated light-emitting element only. The light-emitting elements are preferably light-emitting diodes, which may be selected, e.g., from the group consisting of monochromatic light-emitting diodes and white light-emitting diodes. In particular, the light-emitting diodes may be anorganic light-emitting diodes or organic light-emitting diodes (OLEDs). Due to their small size, OLEDs may be advantageously in cases in which it is desired to create a light field having a "high resolution", so that the dimension or dimensions can be changed in very small steps and no light diffuser is required.

For applying drops 8 to the surface 6 of the sample body 7, the apparatus 4 further includes a syringe type drop dosing devices 30, which includes a needle 31 and a syringe body 38. The tip 32 of the needle 31 projects downwardly towards the surface 6 from an opening 33 provided in the bottom side of the housing 5, but is spaced from the surface 6. At the tip 32 an outlet is provided from which liquid transported within the needle 31 can exit to form the drop 8.

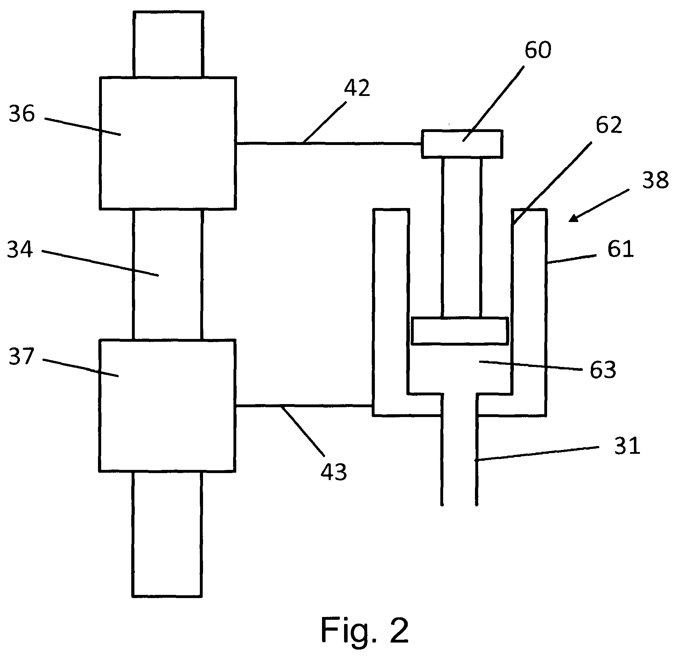

At the end 32 of the needle 31 opposite the tip 32 the syringe body 38 is mounted in the usual manner and includes a piston chamber 62 (see Figure 2) in which a liquid is or can be stored.

It should be noted that more than one such syringe type drop dosing device 30 may be provided in the apparatus 4, and that in case of more than one drop dosing device 30 the other ones may be located behind the drop dosing device 30 shown in Figure 1, i.e. behind the plane of the drawing.

Further, the drop dosing device 30 comprises a screw spindle 34 extending perpendicularly to the surface 6 and being mounted at its bottom end to the bottom of the housing 5 and at its top end to a wall portion of the housing by means of a mounting bracket 41. On the spindle 34 two electric motors 36 and 37 are mounted in such a manner that each of them is guided by the spindle 34 for movement in the vertical direction upon operation of the respective motor 36, 37, wherein the motor 36 is coupled by means of a rigid coupling element 42 to a piston 60 of the syringe body 38 and the motor 37 is coupled by means of a rigid coupling element 43 to the lower end of the syringe body 38. Each of the motors 36, 37 is connected to a controller 39 adapted for independently controlling operation of the motors 36, 37.

As will be explained in more detail with reference to Figure 2 below, for applying a drop 8 to the surface 6 the controller 39 controls the motors 36, 37 to move the piston 60 for forming a drop at the tip 32, and to move the entire syringe 30 in order to place the drop on the surface 6.

The controller 39 is also connected to the illuminating device 20 for controlling operation of this component, and to a processing device 40 operably connected to the camera 10. The processing device 40 in turn controls operation of the camera 10 and is adapted and operable to receive and analyze images recorded by the camera 10.

In the illustrated embodiment both the controller 39 and the processing device 40 are shown as being disposed inside the housing 5. For example, the controller 39 may be provided as a microcontroller. However, it is also possible that the controller 39 and/or the processing device 40 is provided as a separate device outside the housing 5, for example as a suitably programmed computer or PC.

The syringe type drop dosing device 30 is shown in more detail in the schematic illustration of Figure 2. As can be seen in Figure 2, the syringe body 38 comprises a housing 61, a piston chamber 62, in which the piston 60 is movably mounted and in which a space 63 for receiving liquid is provided. If both motors 36, 37 are controlled by the controller 39 to move in the same direction and at the same speed, the coupling elements 42, 43 are moved up or down along the spindle 34 while the distance between the coupling elements 42, 43 is maintained constant. Thus, in this mode of operation the entire drop dosing device 30 is moved up and down, respectively. By contrast, if the controller 39 controls the motor 37 not to operate and to therefore maintain its position on the spindle 37 and the motor 36 to move towards or away from the motor 37. In this mode of operation the piston 60 is moved downwardly and upwardly, respectively, in order to force liquid through the needle 31 and out of its tip 32 and draw liquid into the space 63, respectively. Consequently, both modes of operation can be carried out although only a single spindle 34 is used.

It is to be noted that whereas in Figure 2 the coupling elements 42, 43 are shown to be rigidly attached fixedly or releasably to the piston 60 and the syringe body 38, respectively, in Figure 1 a slightly different possible arrangement is illustrated. The coupling element 43 engages a bottom surface of the syringe body 38 such that it is supported thereon against the force of gravity, and the coupling element 42 engages a top surface of the piston 60. In this manner, the coupling elements 42, 43 are coupled to the piston 60 and syringe body 38 by means of this engagement, and the syringe type drop dosing device 30 is held between the two coupling elements 42, 43. This arrangement allows for a very simple removal of the syringe type drop dosing device 30 from the apparatus for cleaning or (manual) refilling purposes, but does not allow upward movement of the piston 60 with respect to the syringe body 38 by operating the motor 36.

For carrying out a contact angle measurement, an operator positions the apparatus 4 above the surface 6 of the sample body 7 in the position illustrated in Figure 1 and presses a button 50 mounted on the housing 5 and connected to the controller 39. The controller 39 is adapted to detect pressing of the button 50 and to then initiate an automatic control sequence, in which only the motors 36 is operated to form a drop at the tip 32 of the needle 31, and then the motors 36, 37 are operated together to move the tip 32 together with the entire drop dosing device 30 towards the surface 6 until the drop contacts the surface 6 and is transferred to it, or vice versa. Then, the illuminating device 20 is controlled to illuminate the drop 8 from the left-hand side in Figure 1, and the camera 10 is operated - via the processing device 40 - to record a shadow image of the drop 8 viewing it from the right-hand side in Figure 1. The processing device 40 receives the image and carries out a contour analysis for the drop 8 and subsequently a determination of the contact angle for the drop 8. If two drop dosing devices 30 are utilized as noted above, they can be operated simultaneously in the above manner in order to apply to drops 8 of liquids having different polarities to the surface 6 next to each other. The processing device 40 may then be adapted to determine the surface free energy from the two contact angles of the two drops 8. Thus, the measurement is carried out automatically in a very simple manner by simply pressing the button 50.

## Claims

1. A contact angle measurement apparatus for measuring a contact angle between a surface (6) of a solid sample body (7) and at least one drop (8) of sample liquid disposed on the surface (6), the apparatus comprising:
at least one drop dosing device (30) having a fluid storing chamber for storing a liquid and being adapted and arranged for applying a drop (8) of a liquid stored in the fluid storing chamber onto a surface (6) of a sample body (7),
an illuminating device (20) adapted and arranged for illuminating each drop (8) applied by the at least one drop dosing device (30) onto the surface (6) from a first side of the at least one drop (8), and
an image recording device (10) adapted and arranged for recording an image of at least a transition region between the surface (6) and each drop (8) applied by the at least one drop dosing device (30) onto the surface (6) in side view from a second side of the drop (8) opposite the first side,
wherein each of the at least one drop dosing device (30) comprises
- a syringe including the fluid storing chamber and having a needle (31) and a movable piston (60) and adapted to supply, by movement of the piston (60), liquid from the fluid storing chamber through the needle (31) and out of an opening of the needle (31) onto the surface (6),
- a first motor (37) coupled to a portion of the syringe other than the piston (60) and adapted to move the syringe, and
- a second motor (36) coupled to the piston (60) and adapted for moving the piston (60),
and the contact angle measurement apparatus comprises a controller (39) connected to the first and second motors (37, 36) and adapted to control operation of the first and second motors (37, 36),
**characterized in that** the apparatus comprises a screw spindle (34), the first motor (37) and the second motor (36) are movably mounted on the screw spindle (34) for movement along the screw spindle (34) upon operation of the respective motor, wherein
- the controller (39) is adapted to operate both the first and second motors (37, 36) to move with the same speed in the same direction in a first mode of operation for moving the syringe as a whole, and to operate only the second motor (36) while maintaining the first motor (37) stationary in a second mode of operation for operating the piston (60),
- the controller (39) is adapted to operate both the first and second motors (37, 36) to move with different speeds in the same direction in a third mode of operation for moving the syringe as a whole and simultaneously operating the piston (60), or
- the controller (39) is adapted to selectively operate the first and second motors (37, 36) in any of the first mode of operation, the second mode of operation and the third mode of operation.

2. The contact angle measurement apparatus according to claim 1, wherein the controller (39) is adapted to selectively carry out an automatic operating sequence in which the first and second motors (37, 36) are controlled at first in the first mode of operation for moving the syringe towards the surface (6), and subsequently in the second mode of operation for applying a drop (8) of liquid to the surface (6).

3. The contact angle measurement apparatus according to claim 1 or claim 2, the controller (39) is adapted to selectively carry out an automatic operating sequence in which the first and second motors (37, 36) are controlled at first in the second mode of operation for generating a drop (8) at a tip (32) of the needle (31), and subsequently in the first mode of operation for moving the syringe towards the surface (6) and applying the drop (8) of liquid to the surface (6).

4. The contact angle measurement apparatus according to any of the preceding claims, wherein the controller (39) is adapted to selectively carry out an automatic operating sequence in which the first and second motors (37, 36) are controlled in the third mode of operation for simultaneously generating a drop (8) at a tip (32) of the needle (31) and moving the syringe towards the surface (6) and applying the drop (8) of liquid to the surface (6).

5. The contact angle measurement apparatus according to any of the preceding claims, further comprising a distance determining means connected to the controller (39) and adapted to provide a signal representative of the distance between the syringe and the surface (6) to the controller (39).

6. The contact angle measurement apparatus according to any of the preceding claims, wherein each of the at least one drop dosing device (30) is arranged to apply drops (8) of liquid in a field of view of the image recording device (10) and/or in a region illuminated by the illuminating device (20).

7. The contact angle measurement apparatus according to any of the preceding claims, wherein the at least one drop dosing device (30), the illuminating device (20) and the image recording device (10) are integrated into a movable measurement head.

8. The contact angle measurement apparatus according to any of the preceding claims, wherein the image recording device (10) comprises a CCD or CMOS image sensor.

9. The contact angle measurement apparatus according to any of the preceding claims, further comprising a processing device (40) adapted for carrying out a contour recognition of any drops (8) present in images recorded by the image recording device (10) and determining for each of these drops (8) a contact angle from the recognized contour.

10. The contact angle measurement apparatus according to any of the preceding claims, further comprising an actuation means (50) for actuation by an operator and connected to the controller (39), wherein the controller (39) is adapted to detect actuation of the actuation means (50) and, upon detecting actuation, to automatically control the at least one drop dosing device (30) to apply a respective drop (8) of liquid to the surface (6), the illuminating device (20) to illuminate each drop (8) applied by the at least one drop dosing device (30), and the image recording device (10) to record an image of each of the drops (8) illuminated by the illuminating device (20).

## Patentansprüche

1. Kontaktwinkelmessvorrichtung zum Messen eines Kontaktwinkels zwischen einer Fläche (6) eines festen Probekörpers (7) und mindestens einem Tropfen (8) von Probeflüssigkeit, der auf der Fläche (6) angeordnet ist, wobei die Vorrichtung Folgendes umfasst:
mindestens eine Tropfendosierungsvorrichtung (30), die eine Fluidspeicherkammer zum Speichern einer Flüssigkeit aufweist und angepasst und angeordnet ist, um einen Tropfen (8) von einer Flüssigkeit, die in der Fluidspeicherkammer gespeichert ist, auf einer Fläche (6) des Probekörpers (7) aufzubringen,
eine Beleuchtungsvoruchtung (20), die angepasst und angeordnet ist, um jeden Tropfen (8), der durch die mindestens eine Tropfendosierungsvorrichtung (30) auf die Fläche (6) aufgebracht wird, von einer ersten Seite von dem mindestens einen Tropfen (8) zu beleuchten, und
eine Bildaufzeichnungsvorrichtung (10), die angepasst und angeordnet ist, um ein Bild von mindestens einem Übergangsbereich zwischen der Fläche (6) und jedem Tropfen (8), der durch die mindestens eine Tropfendosierungsvorrichtung (30) auf die Fläche (6) aufgebracht wird, in der Seitenansicht von einer zweiten Seite des Tropfens (8) aufzuzeichnen, die der ersten Seite entgegengesetzt ist,
wobei jede von der mindestens einen Tropfendosierungsvorrichtung (30) Folgendes umfasst:
- eine Spritze, die die Fluidspeicherkammer umfasst und eine Nadel (31) und einen beweglichen Kolben (60) aufweist und angepasst ist, um durch die Bewegung des Kolbens (60) Flüssigkeit von der Fluidspeicherkammer durch die Nadel (31) und aus einer Öffnung der Nadel (31) auf die Fläche (6) auszubringen,
- einen ersten Motor (37), der an einen Abschnitt der Spritze gekoppelt ist, der sich von dem Kolben (60) unterscheidet und angepasst ist, um die Spritze zu bewegen, und
- einen zweiten Motor (36), der an den Kolben (60) gekoppelt und angepasst ist, um den Kolben (60) zu bewegen,
und die Kontaktwinkelmessvorrichtung eine Steuereinrichtung (39) umfasst, die mit dem ersten und dem zweiten Motor (37, 36) verbunden und angepasst ist, um den Betrieb des ersten und des zweiten Motors (37, 36) zu steuern,
**dadurch gekennzeichnet, dass** die Vorrichtung eine Schraubenspindel (34) umfasst, wobei der erste Motor (37) und der zweite Motor (36) beweglich an der Schraubenspindel (34) zur Bewegung entlang der Schraubenspindel (34) bei der Betätigung des entsprechenden Motors angebracht ist, wobei
- die Steuereinrichtung (39) angepasst ist, um sowohl den ersten als auch den zweiten Motor (37, 36) zu betätigen, um sich in einer ersten Betriebsart mit der gleichen Geschwindigkeit in die gleiche Richtung zu bewegen, um die Spritze als Ganzes zu bewegen, und lediglich den zweiten Motor (36) zu betätigen, während der erste Motor (37) in einer zweiten Betriebsart zur Betätigung des Kolbens (60) unbeweglich gehalten wird,
- die Steuereinrichtung (39) angepasst ist, sowohl den ersten als auch den zweiten Motor (37, 36) zu betätigen, um sich in einer dritten Betriebsart mit unterschiedlichen Geschwindigkeiten in die gleiche Richtung zu bewegen, um die Spritze als Ganzes zu bewegen und gleichzeitig den Kolben (60) zu betätigen, oder
- die Steuereinrichtung (39) angepasst ist, um den ersten und den zweiten Motor (37, 36) selektiv in irgendeiner von der ersten Betriebsart, der zweiten Betriebsart und der dritten Betriebsart zu bewegen.

2. Kontaktwinkelmessvorrichtung nach Anspruch 1, wobei die Steuereinrichtung (39) angepasst ist, um selektiv eine automatische Betätigungsfolge durchzuführen, in der der erste und der zweite Motor (37, 36) zuerst in der ersten Betriebsart, um die Spritze in Richtung der Fläche (6) zu bewegen, und anschließend in der zweiten Betriebsart gesteuert werden, um einen Flüssigkeitstropfen (8) auf die Fläche (6) aufzubringen.

3. Kontaktwinkelmessvorrichtung nach Anspruch 1 oder Anspruch 2, wobei die Steuereinrichtung (39) angepasst ist, um selektiv eine automatische Betätigungsfolge durchzuführen, in der der erste und der zweite Motor (37, 36) zuerst in der zweiten Betriebsart, um einen Tropfen (8) an einer Spitze (32) der Nadel (31) zu erzeugen, und anschließend in der ersten Betriebsart, gesteuert werden, um die Spritze in Richtung der Fläche (6) zu bewegen und den Flüssigkeitstropfen (8) auf die Fläche (6) aufzubringen.

4. Kontaktwinkelmessvorrichtung nach einem der vorhergehenden Ansprüche, wobei die Steuereinrichtung (39) angepasst ist, um selektiv eine automatische Betriebsfolge durchzuführen, in der der erste und der zweite Motor (37, 36) in der dritten Betriebsart gesteuert werden, um gleichzeitig einen Tropfen (8) an einer Spitze (32) der Nadel (31) zu erzeugen und die Spritze in Richtung der Fläche (6) zu bewegen und den Flüssigkeitstropfen (8) auf die Fläche (6) aufzubringen.

5. Kontaktwinkelmessvorrichtung nach einem der vorhergehenden Ansprüche, die ferner ein Abstandsbestimmungsmittel umfasst, das mit der Steuereinrichtung (39) verbunden ist und angepasst ist, um ein Signal, das für den Abstand zwischen der Spritze und der Fläche (6) repräsentativ ist, für die Steuereinrichtung (39) bereitzustellen.

6. Kontaktwinkelmessvorrichtung nach einem der vorhergehenden Ansprüche, wobei jede von der mindestens einen Tropfendosierungsvorrichtung (30) angeordnet ist, um Tropfen (8) von Flüssigkeit in einem Sichtfeld der Bildaufzeichnungsvorrichtung (10) und/oder in einem Bereich auszubringen, der durch die Beleuchtungsvoruchtung (20) beleuchtet wird.

7. Kontaktwinkelmessvorrichtung nach einem der vorhergehenden Ansprüche, wobei die mindestens eine Tropfendosierungsvorrichtung (30), die Beleuchtungsvorrichtung (20) und die Bildaufzeichnungsvorrichtung (10) in einen beweglichen Messkopf integriert sind.

8. Kontaktwinkelmessvorrichtung nach einem der vorhergehenden Ansprüche, wobei die Bildaufzeichnungsvorrichtung (10) einen CCD- oder CMOS-Bildsensor umfasst.

9. Kontaktwinkelmessvorrichtung nach einem der vorhergehenden Ansprüche, die ferner eine Verarbeitungsvorrichtung (40) umfasst, die angepasst ist, um eine Konturenerkennung von Tropfen (8) durchzuführen, die in Bildern vorhanden sind, die durch die Bildaufzeichnungsvorrichtung (10) aufgezeichnet werden, und für jeden dieser Tropfen (8) einen Kontaktwinkel von der erkannten Kontur zu bestimmen.

10. Kontaktwinkelmessvorrichtung nach einem der vorhergehenden Ansprüche, die ferner ein Betätigungsmittel (50) zur Betätigung durch einen Bediener umfasst, das mit der Steuereinrichtung (39) verbunden ist, wobei die Steuereinrichtung (39) angepasst ist, um die Betätigung der Betätigungsmittel (50) zu ermitteln und bei der Ermittlung einer Betätigung die mindestens eine Tropfendosierungsvorrichtung (30) automatisch zu steuern, um einen entsprechenden Flüssigkeitstropfen (8) auf die Fläche (6) auszubringen, wobei die Beleuchtungsvorrichtung (20) zum Beleuchten jedes Tropfens (8), der durch die mindestens eine Tropfendosierungsvorrichtung (30) aufgebracht wird, und die Bildaufzeichnungseinheit (10) zum Aufzeichnen eines Bildes von jedem der Tropfen (8) ausgestaltet sind, der durch die Beleuchtungsvorrichtung (20) beleuchtet wird.

## Revendications

1. Appareil de mesure d'angle de contact destiné à mesurer un angle de contact entre une surface (6) d'un corps échantillon (7) solide et au moins une goutte (8) de liquide échantillon disposée sur la surface (6), l'appareil comprenant :
au moins un dispositif de dosage de goutte (30) ayant une chambre de stockage de fluide pour stocker un liquide et étant adapté et agencé pour appliquer une goutte (8) d'un liquide stocké dans la chambre de stockage de fluide sur une surface (6) d'un corps échantillon (7),
un dispositif d'éclairage (20) adapté et agencé pour éclairer chaque goutte (8) appliquée par le dispositif de dosage de goutte (30) au moins au nombre de un sur la surface (6) à partir d'un premier côté de la goutte (8) au moins au nombre de un, et
un dispositif d'enregistrement d'image (10) adapté et agencé pour enregistrer une image d'au moins une région de transition entre la surface (6) et chaque goutte (8) appliquée par le dispositif de dosage de goutte (30) au moins au nombre de un sur la surface (6) dans une vue de côté à partir d'un deuxième côté de la goutte (8) opposé au premier côté,
dans lequel chaque dispositif de dosage de goutte (30) au moins au nombre de un comprend
- une seringue incluant la chambre de stockage de fluide et ayant une aiguille (31) et un piston (60) mobile et adaptée pour fournir, par le mouvement du piston (60), du liquide à partir de la chambre de stockage de fluide via l'aiguille (31) et hors d'une ouverture de l'aiguille (31) en direction de la surface (6),
- un premier moteur (37) couplé à une portion de la seringue autre que le piston (60) et adapté pour déplacer la seringue, et
- un deuxième moteur (38) couplé au piston (60) et adapté pour déplacer le piston (60),
et l'appareil de mesure d'angle de contact comprend un organe de commande (39) raccordé au premier et au deuxième moteur (37, 36) et adapté pour commander le fonctionnement des premier et deuxième moteurs (37, 36),
**caractérisé en ce que** l'appareil comprend une broche filetée (34), le premier moteur (37) et le deuxième moteur (36) sont montés de façon mobile sur la broche filetée (34) pour le mouvement le long de la broche filetée (34) lors du fonctionnement du moteur respectif, dans lequel
- l'organe de commande (39) est adapté pour faire fonctionner le premier et le deuxième moteur (37, 36) pour qu'ils se déplacent à la même vitesse dans la même direction dans un premier mode de fonctionnement pour déplacer la seringue comme un ensemble, et pour faire fonctionner uniquement le deuxième moteur (36) tout en maintenant le premier moteur (37) stationnaire dans un deuxième mode de fonctionnement pour faire fonctionner le piston (60),
- l'organe de commande (39) est adapté pour faire fonctionner et le premier et le deuxième moteur (37, 36) pour qu'ils se déplacent à des vitesses différentes dans la même direction dans un troisième mode de fonctionnement pour déplacer la seringue comme un ensemble tout en faisant fonctionner le piston (60) simultanément, ou
- l'organe de commande (39) est adapté pour faire fonctionner sélectivement les premier et deuxième moteurs (37, 36) dans un mode de fonctionnement quelconque parmi le premier mode de fonctionnement, le deuxième mode de fonctionnement et le troisième mode de fonctionnement.

2. Appareil de mesure d'angle de contact selon la revendication 1, dans lequel l'organe de commande (39) est adapté pour effectuer sélectivement une séquence de fonctionnement automatique dans laquelle les premier et deuxième moteurs (37, 36) sont commandés d'abord dans le premier mode de fonctionnement pour déplacer la seringue vers la surface (6) et puis dans le deuxième mode de fonctionnement pour appliquer une goutte (8) de liquide sur la surface (6).

3. Appareil de mesure d'angle de contact selon la revendication 1 ou la revendication 2, l'organe de commande (39) est adapté pour effectuer sélectivement une séquence de fonctionnement automatique dans laquelle les premier et deuxième moteurs (37, 36) sont commandés d'abord dans le deuxième mode de fonctionnement pour générer une goutte (8) au bout (32) de l'aiguille (31), et puis dans le premier mode de fonctionnement pour déplacer la seringue vers la surface (6) et appliquer la goutte (8) de liquide sur la surface (6).

4. Appareil de mesure d'angle de contact selon l'une quelconque des revendications précédentes, dans lequel l'organe de commande (39) est adapté pour effectuer sélectivement une séquence de fonctionnement automatique dans laquelle les premier et deuxième moteurs (37, 36) sont commandés dans le troisième mode de fonctionnement pour générer simultanément une goutte (8) au bout (32) de l'aiguille (31) et déplacer la seringue vers la surface (6) et appliquer la goutte (8) de liquide sur la surface (6).

5. Appareil de mesure d'angle de contact selon l'une quelconque des revendications précédentes, comprenant également un moyen de détermination de distance raccordé à l'organe de commande (39) et adapté pour fournir à l'organe de commande (39) un signal représentatif de la distance entre la seringue et la surface (6).

6. Appareil de mesure d'angle de contact selon l'une quelconque des revendications précédentes, dans lequel chaque dispositif de dosage de goutte (30) au moins au nombre de un est agencé pour appliquer des gouttes (8) de liquide dans un champ de vision du dispositif d'enregistrement d'image (10) et/ou dans une région éclairée par le dispositif d'éclairage (20).

7. Appareil de mesure d'angle de contact selon l'une quelconque des revendications précédentes, dans lequel le dispositif de dosage de goutte (30) au moins au nombre de un, le dispositif d'éclairage (20) et le dispositif d'enregistrement d'image (10) sont intégrés dans une tête de mesure mobile.

8. Appareil de mesure d'angle de contact selon l'une quelconque des revendications précédentes, dans lequel le dispositif d'enregistrement d'image (10) comprend un capteur d'image CCD ou CMOS.

9. Appareil de mesure d'angle de contact selon l'une quelconque des revendications précédentes, comprenant également un dispositif de traitement (40) adapté pour effectuer une reconnaissance de contour de n'importe quelles gouttes (8) présentes dans des images enregistrées par le dispositif d'enregistrement d'image (10) et pour déterminer pour chacune de ces gouttes (8) une angle de contact à partir du contour reconnu.

10. Appareil de mesure d'angle de contact selon l'une quelconque des revendications précédentes, comprenant également un moyen d'actionnement (50) pour l'actionnement par un opérateur et raccordé à l'organe de commande (39), dans lequel l'organe de commande (39) est adapté pour détecter l'actionnement du moyen d'actionnement (50) et, lors de la détection de l'actionnement, pour commander automatiquement le dispositif de dosage de goutte (30) au moins au nombre de un pour qu'il applique une goutte (8) respective de liquide sur la surface (6), le dispositif d'éclairage (20) pour qu'il éclaire chaque goutte (8) appliquée par le dispositif de dosage de goutte (30) au moins au nombre de un, et le dispositif d'enregistrement d'image (10) pour qu'il enregistre une image de chacune des gouttes (8) éclairées par le dispositif d'éclairage (20).
